## Europäisches Patentamt

## European Patent Office

## Office européen des brevets

(11) Veröffentlichungsnummer: **0 208 011**
**B1**

(12) # EUROPÄISCHE PATENTSCHRIFT

<br>

(45) Veröffentlichungstag der Patentschrift:
**17.11.88**

(21) Anmeldenummer: **85108585.2**

(22) Anmeldetag: **10.07.85**

(51) Int. Cl.⁴: **G 01 M 11/00**, G 02 B 6/28

(54) **Lichtkoppelvorrichtung für die optische Reflektometrie.**

(43) Veröffentlichungstag der Anmeldung:
**14.01.87 Patentblatt 87/3**

(45) Bekanntmachung des Hinweises auf die Patenterteilung:
**17.11.88 Patentblatt 88/46**

(84) Benannte Vertragsstaaten:
**DE FR GB NL**

(56) Entgegenhaltungen:
**DE - A - 3 035 025**
**FR - A - 1 236 974**

**ELECTRONICS LETTERS, Band 18, Nr. 20, September 1982, Seiten 862,863, London, GB; P. HEALEY et al.: "OTDR in single-mode fibre at 1-5 um using heterodyne detection"**
**ELECTRONICS LETTERS, Band 17, Nr. 5, März 1981, Seiten 193,194, London, GB; B.Y. KIM et al.: "Backscattering measurement of bending-induced birefringence in single mode fibres"**

(73) Patentinhaber: **Hewlett-Packard GmbH, Herrenberger Strasse 130 Postfach 14 30, D-7030 Böblingen (DE)**

(72) Erfinder: **Gäng, Achim, Dr.-Ing., Alpirsbacher Weg 10, D-7000 Stuttgart 80 (DE)**

(74) Vertreter: **Schulte, Knud, Dipl.-Ing., c/o Hewlett-Packard GmbH Europ. Patent- und Lizenzabteilung Postfach 1430 Herrenberger Strasse 130, D-7030 Böblingen (DE)**

## Beschreibung

Die Erfindung bezieht sich auf eine Lichtkoppelvorrichtung, für die optische Reflektometrie, insbesondere an einer Monomodeglasfaser. Derartige Vorrichtungen werden verwendet, um das Reflexionsverhalten sowie die räumliche Lage von Schnittstellen, Bruchstellen oder anderen Störungen an Glasfaserkabeln auszumessen. Das Licht eines gepulst betriebenen Lasers wird der auszumessenden Glasfaser zugeführt, und das von der Glasfaser rückgestreute Licht wird durch einen in der Koppeleinrichtung vorgesehenen Strahlteiler zu einem Messausgang ausgekoppelt. Zur Auswsertung des rückgestreuten Lichts kann dann am Messausgang ein die Lichtintensität anzeigendes Messgerät angeschlossen werden.

Die Auslegung solcher Vorrichtungen hängt entscheidend davon ab, ob Multimodeglasfasern oder Monomodeglasfasern ausgemessen werden sollen. In der relativ dicken Multimodeglasfaser — Kerndurchmesser ca. 50-120 µm — kann sich Licht durch wiederholte Totalreflexion an den Wänden der Faser in vielen unterschiedlichen Ausbreitungsmoden fortpflanzen. Bei Einstrahlung von linear polarisiertem Laserlicht findet wegen der vielen unterschiedlichen Ausbreitungsmoden in solchen Fasern schon auf einer Strecke von ca. 10 cm eine praktisch vollkommene Depolasisierung statt, d.h. das sich in der Faser ausbreitende Licht wird zu einem statischen Gemisch von Anteilen unterschiedlicher Polarisation. Bei Monomodefasern, die im allgemeinen geringere Dämpfung aufweisen als Multimodefasern, liegt der Durchmesser des Kerns im Bereich der Lichtwellenlänge (Durchmesser ca. 9-12 µm), was bewirkt, dass nur ein räumlicher Mode ausbreitungsfähig ist. Linear polarisiert eingestrahltes Licht bleibt in solchen Fasern über grosse Strecken (einige Kilometer) linear polarisiert; entsprechend ist dann das zurückgestreute Licht ebenfalls linear polarisiert.

Weil nun thermische Spannungen und mechanische Belastungen der Monomodefaser, beispielsweise Verbiegungen, die Polarisationsrichtung von linear polarisiertem Licht drehen können, werden bei den bekannten Vorrichtungen dieser Art halbdurchlässige Spiegel oder faseroptische Strahlteiler zur Strahlteilung verwendet, bei denen das Teilerverhältnis nicht oder nur sehr geringfügig von der Polarisationsrichtung des Lichts abhängt. Hierdurch werden Messfehler vermieden, die sich an Monomodefasern aus der unvorhersehbaren Polarisationsrichtung des auf den ersten Kilometern zurückgestreuten Lichts ergeben können. Eine derartige Vorrichtung, die auch zwischen dem Strahlteiler und der Glasfaser einen Depolarisator aufweist, ist bekannt aus: P. Healey et al.: «OTDR in single-mode fibre at 1-5 um using heterodyne detection», ELECTRONICS LETTERS, Band 18, Nr. 20, Seiten 862-863. Es tritt aber bei derartigen Vorrichtungen der Nachteil auf, dass 50% der am Laser verfügbaren Lichtleistung schon beim Einkoppeln beim Durchgang durch den Strahlteiler aus dem Strahl abgelenkt werden und damit verlorengehen.

Demgegenüber wird durch die Merkmale des Anspruchs 1 die Aufgabe gelöst, die Lichtausbeute wesentlich zu erhöhen.

Anspruchsgemäss wird als Strahlteiler ein polarisationsoptischer Strahlteiler verwendet, der so angeordnet und ausgerichtet ist, dass er das polarisierte Laserlicht im wesentlichen verlustlos weiterleitet. Dies polarisierte Licht wird dann mit Hilfe eines Depolarisators depolarisiert und in die Glasfaser eingeleitet. Das rückgestreute Licht gelangt wiederum über den Depolarisator zum Strahlteiler, wo im wesentlichen die Hälfte des rückgestreuten Lichts aus dem Hauptstrahlungsgang abgelenkt und dem Messausgang zugeführt wird.

Durch die Verwendung eines polarisationsoptischen Strahlteilers in Verbindung mit einem Depolarisator wird neben dem wesentlichen Vorteil, dass praktisch die gesamte verfügbare Laserleistung zur Einstrahlung in die Faser gelangt, auch noch der weitere Vorteil erzielt, dass die Monomodefaser im wesentlichen gleichmässig über alle Polarisationsrichtungen belastet wird. Bekanntlich treten in Glasfasern bei hohen Leistungsdichten nichtlineare Effekte auf; durch die Gleichverteilung der Leistungsdichte auf die Polarisationsrichtungen kann insgesamt eine höhere Leistung eingekoppelt werden, ohne dass es zu Nichtlinearitäten kommt.

Die Eigenschaften des Depolarisators wirken mit der spektralen Verteilung von Impulslaserlicht zusammen. Die Wirkung ist derart, dass Polarisationsrichtung und Phasenlage der verschiedenen Spektralanteile gegeneinander um unterschiedliche Beträge verdreht bzw. verschoben werden. Hinter dem Depolarisator liegt dann ein Gemisch verschiedener Polarisationszustände vor, das bei Nachweis mit einem üblichen Photodetektor, beispielsweise einer Photodiode, nicht von unpolarisiertem Licht unterscheidbar ist.

Die Monomodefaser wird so praktisch ohne Leistungsverlust mit depolarisiertem Licht beschickt. Dies hat weiterhin den Vorteil, dass auch Defektstellen messtechnisch erfasst werden, bei denen das Auftreten von Reflexen von der Polarisationsrichtung des eintreffenden Lichts abhängig ist. Das Rückstreulicht tritt ein zweites Mal durch den Depolarisator, bevor es zum Strahlteiler gelangt, so dass die Polarisationsabhängigkeit des Teilerverhältnisses keinen Einfluss mehr darauf hat, wie gross der zum Messausgang gekoppelte Intensitätsanteil ist. Auch die ersten Kilometer der Monomodefaser können so ohne polarisationsbedingte Unsicherheiten ausgemessen werden.

Folgende bevorzugte Ausführungsformen der Erfindung sind in den Unteransprüchen gekennzeichnet:

Nach Anspruch 2 kann als Strahlteiler ein Foster-Prisma verwendet werden, welches das vom Impulslaser kommende Licht nahezu zu 100% durchlässt.

Nach Anspruch 3 kann das Foster-Prisma aus zwei Kalkspatschichten bestehen, deren Verbindungsebene gegenüber der Strahlungsdichte des Laserlichts um 22,5 Grad geneigt ist. Mit einem derartigen Strahlteiler kann für den Laserstrahl eine Durchlässigkeit von 99,5% erreicht werden.

Nach Anspruch 4 kann der Depolarisator als Lyot-Depolarisator ausgebildet sein. Dieser Depolarisator ist aus zwei parallel verlaufenden Kalkspatschichten aufgebaut, deren Hauptachsen in einem Winkel von 45 Grad zueinander stehen, wobei die eine Schicht doppelt so dick ist wie die andere.

Nach Anspruch 5 kann der Depolarisator in der Vorrichtung so angeordnet sein, dass die Glasfaser mit ihm in Berührungskontakt gebracht werden kann, wobei dann an der der Glasfaser zugewandten Seite vorteilhaft eine Schicht als Quarzglas vorzusehen ist, die einen reflexionsfreien Übergang zur Glasfaser vermittelt. Hierdurch wird der sonst an der Übergangsstelle zur Glasfaser auftretende sogenannte Frontreflex vermieden. Eine solche Reflexion des Laserlichts aufgrund des Unterschieds im Brechungsindex zwischen der Glasfaser und einem an sie angrenzenden Medium kann wegen ihrer hohen Intensität und wegen der begrenzten Bandbreite der verwendeten Messgeräte eine Messung über mehrere huntert Meter am Faseranfang unmöglich machen. Diese Ausführungsform macht sich den Umstand zunutze, dass bei marktgängigen Steckverbindern für Monomodefasern der Faserkern vor die Vorderfläche des Steckerkörpers ragt und somit direkt in Kontakt zum Depolarisator gebracht werden kann. Die Quarzglasschicht schützt ausserdem den relativ weichen Depolarisator vor Verletzungen durch die plan aufgedrückte harte Glasfaser.

Nach Anspruch 6 kann der Strahlteiler an seinen dem Depolarisator und dem Messausgang zugewandten Seiten jeweils eine Linse besitzen, die vorzugsweise aufgekittet sind. Durch diese Massnahme werden Reflexionen zwischen Strahlteiler und Linsen vermieden. Es besteht aber auch die Möglichkeit, nach Anspruch 7 den Depolarisator unmittelbar auf den Strahlteiler aufzusetzen und die Linse an der Seite des Depolarisators aufzubringen, die der Glasfaser zugewandt ist. Nach Anspruch 8 kann die Vorrichtung auch für Multimodeglasfasern verwendet werden. Hierfür ist es vorteilhaft, den Depolarisator derart austauschbar zu montieren, dass er durch eine Glasscheibe ersetzt werden kann. Bei Ersatz des Depolarisators durch eine Glasscheibe bewirkt der polarisationsoptische Strahlteiler eine Unterdrückung des noch verbleibenden Restes an Frontreflex von der Galsfaser.

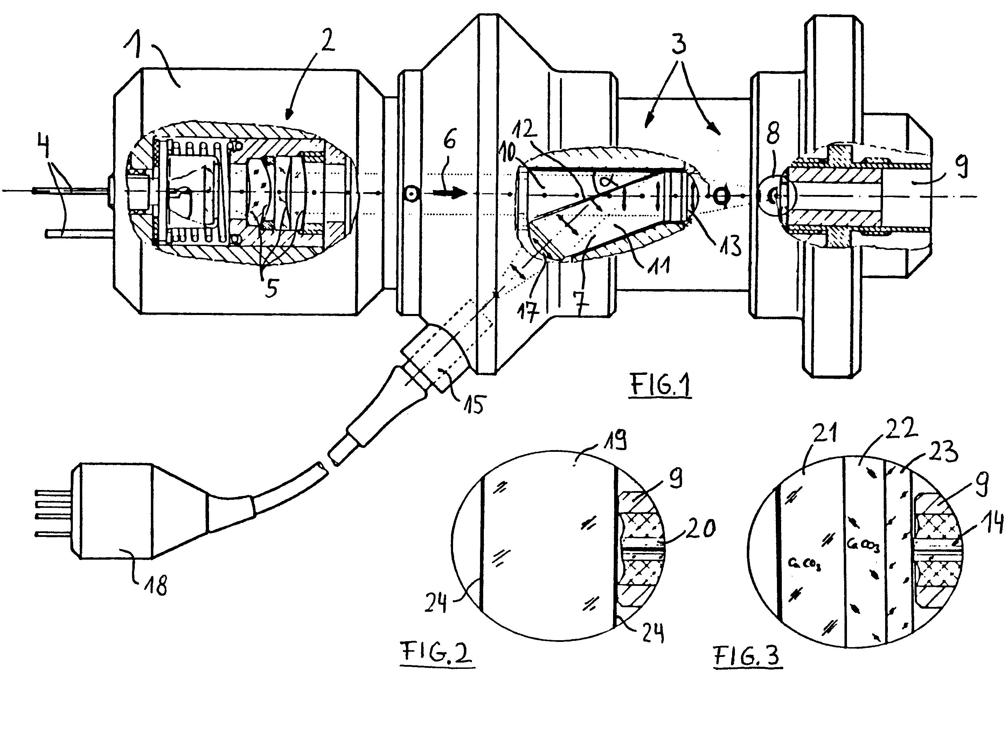

Ein Ausführungsbeispiel der Erfindung wird nachfolgend unter Bezugnahme auf die beigefügten Zeichnungen näher erläutert, wobei das Ausführungsbeispiel nach Figur 2 ohne Depolarisator als solches nicht beansprucht ist.

Es zeigt:

Fig. 1 eine optische Einheit zur Einkopplung und Auskopplung von Licht wahlweise für Monomode-Glasfasern oder für Multimode-Glasfasern,

Fig. 2 einen Ausschnitt im Bereich des Depolarisators für Multimodeglasfasern und

Fig. 3 einen Ausschnitt im Bereich des Depolarisators für Monomodeglasfasern.

Die in Figur 1 dargestellte Messanordnung besteht im wesentlichen aus einem Impulslaser 1 mit einem Kollimator 2 und einer Koppeleinrichtung 3. Der Impulslaser 1 ist ein herkömmlicher Halbleiter-Laser, dessen elektrische Anschlüsse 4 hinten an der Messanordnung herausragen. Das vom Impulslaser 1 abgestrahlte Licht wird in dem Kollimator 2, der eine vierlinsige Optik besitzt, kollimiert. Die erste der Linsen 5 ist als Meniskuslinse ausgebildet.

Die Hauptstrahlungsrichtung 6 des kollimierten Lichts geht durch einen polarisationsoptischen Strahlteiler 7 und gebündelt durch einen Depolarisator 8, der unmittelbar vor einer Anschlussbuchse 9 angeordnet ist. Der Strahlteiler 7 und der Depolarisator 8 bilden die wesentlichen Teile der Koppeleinrichtung 3.

Der Strahlteiler 7, der als Foster-Prisma ausgebildet ist, besteht aus zwei Kalkspatschichten 10, 11, die an ihrer Verbindungsebene 12 miteinander verkittet sind. Die Verbindungsebene 12 ist gegenüber der Hauptstrahlungsrichtung 6 um den Winkel $\alpha = 22,5$ Grad geneigt. Das die Verbindungsebene 12 unbehindert durchtretende polarisierte Laserlicht wird mittels einer asphärischen Linse 13 gebündelt und dem Depolarisator 8 zugeführt, so dass in eine angeschlossene Glasfaser 14 (Figur 3) depolarisiertes Licht eingekoppelt wird. Das von der Glasfaser 14 rückgestreute Licht gelangt entgegen der Hauptstrahlungsrichtung 6 durch den Depolarisator 8 in den polarisationsoptischen Strahlteiler 7 und wird zu 50% an der Verbindungsebene 12 abgelenkt und einem Messausgang 15 zugeführt. An der dem Messausgang 15 zugewandten Seite des Strahlteilers 7 befindet sich ebenfalls eine asphärische Linse 17, die den auszukoppelnden Lichtstrahl bündet.

Um ein elektrisches Übersprechen zwischen dem Impulslaser und einer als Photodetektor vorgesehenen Photodiode zu vermeiden (der Laser wird mit Strommimpulsen bis zu 2A betrieben), ist vorgesehen, dass die Auskopplung vom Messausgang 15 zur Empfangsdiodeneinheit 18 über eine Glasfaser erfolgt.

In Figur 2 ist ein vergrösserter Ausschnitt aus dem Bereich des Depolarisators 8 dargestellt. In diesem Ausschnitt ist der Depolarisator 8 durch eine Glasscheibe 19 ersetzt. Die optische Einheit kann mit dieser Änderung zur Ankopplung an Multimode-Glasfasern 20 verwendet werden, wobei es wegen der gemischten Verwendung von Multimodefasern und Monomodefasern in den bereits bestehenden Nachrichtenübertragungsstrecken besonders vorteilhaft ist, die Glasscheibe 19 und den Depolarisator 8 manuell oder automatisch auswechselbar zu machen. Die hierfür bestehenden Möglichkeiten sind in der optischen Technik allgemein bekannt. Ein derart ausgerüstetes Gerät wäre universell einsetzbar.

Bei der Anordnung nach Figur 2 unterdrückt der polarisationsoptische Strahlteiler 7 den Frontreflex von der Glasfaser; das an deren Vorderfläche reflektierte Licht ist gleich polarisiert wie das einfallende, vom Laser stammende Licht und wird deshalb nicht zum Messausgang hin ausgekoppelt, sondern passiert die strahlteilende Grenzschicht 12 ebenso ungehindert und gelangt zum Laser zurück. Die ist von besonderem Vorteil, weil der Frontreflex wegen der begrenzten Bandbreite der Messelektronik üblicherweise die Messung für die ersten hundert Meter der Glasfaser empfindlich stört.

Der in Figur 3 dargestellte Depolarisator ist für die Verwendung in Verbindung mit einer Modemodeglasfaser 14 ausgebildet und besteht im wesentlichen aus zwei Kalkspatschichten 21, 22, deren eine doppelt so dick ist wie die andere und deren Hauptachsen in einem Winkel von 45 Grad zueinander stehen. An der der Glasfaser 14 zugewandten Seite ist zusätzlich eine Quarzschicht 23 aufgebracht, die ein reflexionsfreies Einkoppeln in die Glasfaser 14 ermöglicht und mechanischen Schutz für die angrenzende Kalkspatschicht 22 bietet. Figur 3 zeigt ausserdem die bei Steckverbindern für Monomodeglasfasern übliche geringe Überlänge der Glasfaser 14, deren Kern um wenige Mikrometer vor die Vorderfläche des Steckerkörpers ragt und somit plan auf den Depolarisator 8 aufgedrückt werden kann. Im Gegensatz dazu endet bei Steckverbindern für Multimodeglasfasern die Faser üblicherweise hinter der Vorderfläche des Steckerkörpers und ist leicht angeschrägt geschliffen, wie in Figur 2 gezeigt.

Die optischen Elemente besitzen ausserdem Oberflächenvergütungen 24, um Reflexionen zu verringern.

## Patentansprüche

1. Lichtkoppelvorrichtung, für die optische Reflektometrie, insbesondere an einer Monomodeglasfaser, mit einer Einrichtung zum Einkoppeln von Laserlicht in eine Glasfaser (14), wobei die Vorrichtung einen Strahlteiler (7) zum Auskoppeln des von der Glasfaser (14) rückgestreuten Lichts zu einem Messausgang (15) aufweist, wobei zum Erzielen höherer Lichtintensität am Messausgang (15)
— als Strahlteiler ein polarisationsoptischer Strahlteiler (7) vorgesehen ist, der zur Polarisationsebene des Laserlichts so ausgerichtet ist, dass er das Laserlicht im wesentlichen verlustlos weiterleitet, und
— zwischen dem Strahlteiler (7) und der Glasfaser (14) ein Depolarisator (8) vorgesehen ist, der Impulslaserlicht zum vollständigen Ausleuchten der Glasfaser (14) zu depolarisieren vermag und das rückgestreute Licht im wesentlichen verlustlos zum Strahlteiler (7) weiterleitet.

2. Vorrichtung nach Anspruch 1, dadurch gekennzeichnet, dass der Strahlteiler (7) ein Foster-Prisma ist.

3. Vorrichtung nach Anspruch 1 oder 2, dadurch gekennzeichnet, dass der Strahlteiler (7) aus zwei Kalkspatschichten (10, 11) besteht, deren Verbindungsebene (12) gegenüber der Richtung (6) des Laserlichts um 22,5 Grad geneigt ist.

4. Vorrichtung nach einem der vorhergehenden Ansprüche, dadurch gekennzeichnet, dass der Depolarisator (8) als Lyot-Depolarisator ausgebildet ist.

5. Vorrichtung nach einem der vorhergehenden Ansprüche, dadurch gekennzeichnet, dass der Depolarisator (8) derart angeordnet ist, dass die Glasfaser dazu in Berührungskontakt gebracht werden kann, und an der der Glasfaser (14) zugewandten Seite mit einer Schicht (23) aus Quarzglas versehen ist, die einen im wesentlichen reflexionsfreien Lichtübergang zur Glasfaser (14) vermittelt und den Depolarisator (8) vor mechanischer Verletzung durch die Glasfaser (14) schützt.

6. Vorrichtung nach einem der vorhergehenden Ansprüche, dadurch gekennzeichnet, dass der Strahlteiler (7) an den beiden Seiten, die dem Depolarisator (8) und dem Messausgang (15) zugewandt sind, jeweils eine Linse (13, 17) besitzt.

7. Vorrichtung nach einem der Ansprüche 1 bis 4, dadurch gekennzeichnet, dass zwischen Depolarisator (8) und Glasfaser (14, 20) eine Linse angeordnet ist, und dass der Depolarisator (8) direkt am Strahlteiler (7) aufgesetzt ist.

8. Vorrichtung nach einem der vorhergehenden Ansprüche, dadurch gekennzeichnet, dass als Glasfaser eine Monomodeglasfaser (14) oder eine Multimodeglasfaser (20) anschliessbar ist.

## Claims

1. Light coupling device for optical reflectometry, especially on a single-mode fibre, with an arrangement for coupling laser light into a glass fibre (14), whereby the device includes a beam divider (7) for decoupling the back-scattered light from the glass fibre (14) to a measuring output (15), whereby for achieving a higher light intensity at measuring output (15),
a polarization-optical beam divider (7) is provided as a beam divider which is oriented relative to the polarization plane of the laser light in such a way that it transmits the laser light substantially without loss, and
a depolarizer (8) is provided between beam divider (7) and glass fibre (14) which is capable of depolarizing the pulsed laser light for complete illumination of glass fibre (14) and which transmits the back-scattered light substantially without loss to the beam divider (7).

2. Device in accordance with claim 1, characterized in that the beam divider (7) is a Foster prism.

3. Device in accordance with claim 1 or 2, characterized in that the beam divider (7) consists of two calcite layers (10, 11) whose connecting plane (12) is inclined by 22,5 degrees relative to the direction (6) of the laser light.

4. Device in accordance with any of the preceding claims, characterized in that the depolarizer (8) is arranged in such a way that the glass fibre can be brought into contact with it, and that it is provided on the side facing the glass fibre (14) with a layer (23) of quartz glass, enabling an essentially reflection-free light transition to the glass fibre (14) and protecting the depolarizer (8) from mechanical damage by the glass fibre (14).

6. Device in accordance with one of the preceding claims, characterized in that the beam divider (7) is provided with one lens (13, 17) on both sides facing the depolarizer (8) and the measuring output (15).

7. Device in accordance with one of the claims 1 to 4, characterized in that a lens is arranged between depolarizer and glass fibre (14, 20) and that the depolarizer (8) is mounted directly on the beam divider (7).

8. Device in accordance with one of the preceding claims, characterized in that as a glass fibre a single-mode glass fibre (14) or a multi-mode glass fibre (20) can be connected.

**Revendications**

1. Dispositif de couplage de la lumière pour la réflectométrie optique en particulier sur une fibre de verre monomode, avec un appareillage pour le couplage de lumière laser dans une fibre de verre (14), dans lequel le dispositif présente un séparateur de faisceau (7) pour le découplage de la lumière rétrodiffusée par la fibre de verre (14) vers une sortie de mesure (15) et dans lequel pour atteindre une intensité lumineuse plus élevée à la sortie de mesure (15)

— en tant que séparateur de faisceau on dispose un séparateur de faisceau à polarisation (7), qui est aligné par rapport au plan de polarisation de la lumière laser de telle façon qu'il transmette sensiblement sans perte la lumière laser, et

— entre le séparateur de faisceau (7) et la fibre de verre (14), est disposé un dépolariseur (8), qui est capable de dépolariser de la lumière laser à impulsions en vue d'une illumination complète de la fibre de verre (14) et qui transmet la lumière rétrodiffusée sensiblement sans perte au séparateur de faisceau (7).

2. Dispositif selon la revendication 1, caractérisé en ce que le séparateur de faisceau (7) est un prisme de Foster.

3. Dispositif selon la revendication 1 ou 2, caractérisé en ce que le séparateur de faisceau (7) se compose de deux lames de calcite (10, 11), dont le plan de liaison est incliné de 22,5 degrés par rapport à la direction (6) de la lumière laser.

4. Dispositif selon l'une des revendications précédentes, caractérisé en ce que le dépolariseur (8) est réalisé en tant que dépolariseur de Lyot.

5. Dispositif selon l'une des revendications précédentes, caractérisé en ce que le dépolariseur (8) est disposé de telle façon que la fibre de verre peut être amenée en affleurement avec celui-ci, et en ce qu'il est pourvu sur la face tournée vers la fibre de verre (14) d'une lame (23) de verre quartzeux qui procure un passage de lumière sensiblement exempt de réflexion à la fibre de verre (14) et protège le dépolariseur (8) de dommages mécaniques dus à la fibre de verre.

6. Dispositif selon l'une des revendications précédentes, caractérisé en ce que le séparateur de faisceau (7) possède une lentille (13, 17) sur chacune des deux faces qui sont tournées vers le dépolariseur (8) et la sortie de mesure (15).

7. Dispositif selon l'une des revendications 1 à 4, caractérisé en ce qu'une lentille est disposée entre le dépolariseur (8) et la fibre de verre (14, 20), et que le dépolariseur (8) est directement posé sur le séparateur de faisceau.

8. Dispositif selon l'une des revendications précédentes, caractérisé en ce que comme fibre de verre on peut raccorder une fibre de verre monomode ou une fibre de verre (14) multimode.

FIG.1

FIG.2

FIG.3